# EUROPÄISCHE PATENTSCHRIFT

(11) **EP 1 349 815 B1**
(45) Veröffentlichungstag und Bekanntmachung des Hinweises auf die Patenterteilung: **22.06.2005**
(21) Anmeldenummer: 01989547.3
(22) Anmeldetag: 30.11.2001
(51) Int. Cl.: C03B 3/02, C03B 3/00, C03B 5/00, C03B 5/235, C03B 5/12

(54) **VORRICHTUNG UND VERFAHREN ZUM EINSCHMELZEN VON GLAS**
DEVICE AND METHOD FOR MELTING GLASS
DISPOSITIF ET PROCEDE DE FUSION DE VERRE

(30) Priorität: 07.12.2000 DE 10060728
(43) Veröffentlichungstag der Anmeldung: 08.10.2003
(73) Patentinhaber: Air Liquide Deutschland GmbH, 40235 Düsseldorf (DE)
(72) Erfinder: VETTER, Johannes, D-4005 Meerbusch 2 (DE)
(86) Internationale Anmeldenummer: PCT/EP2001/014023
(87) Internationale Veröffentlichungsnummer: WO 2002/046110

(56) Entgegenhaltungen:
- EP-A- 0 647 598
- EP-A- 0 743 286
- WO-A-87/07591
- WO-A-93/25486
- US-A- 3 337 324
- US-A- 4 539 035
- US-A- 5 599 182

## Beschreibung

Die Erfindung betrifft eine Vorrichtung sowie ein Verfahren zum Einschmelzen von Glas.

Eine aus der PCT/US9607052 (WO 9705440 A) bekannte Vorrichtung umfasst ein Schmelzaggregat in Form einer senkrecht angeordneten Röhre, die mit einem gasdichten und feuerfesten Mantel versehen ist. Das - üblicherweise keramische - Material, aus dem der Mantel der Röhre gefertigt ist, bestimmt sich je nach dem einzuschmelzenden Rohmaterial, und ist derart gewählt, dass Reaktionen zwischen dem Mantelmaterial und dem einzuschmelzenden Rohmaterial auf ein Minimum reduziert werden. Die Röhre weist in ihrer oberen Stirnseite eine Zugabeöffnung auf, in der das Rohmaterial zugegeben wird. In einem unteren Bereich ist eine Austrittsöffnung zum Abführen der Schmelze vorgesehen.

Das vorbekannte Schmelzaggregat ist konzentrisch in einem isolierten Stahlbehälter aufgenommen. Der ringförmige Zwischenraum zwischen der Isolierung des Behälters und der Keramikröhre bildet den Verbrennungsraum, in dem die für den Schmelzprozess erforderliche Hitze durch Verbrennen eines Gases, bevorzugt Erdgas, erzeugt wird. Das einzuschmelzende Material wird somit indirekt befeuert. Die beim Verbrennungsprozess entstehenden Abgase werden über eine vom Verbrennungsraum abgehende Abgasleitung abgeführt und kommen nicht mit der Schmelze oder dem Rohmaterial in Berührung. Insofern weist die dem Schmelzaggregat entnommene Schmelze gegenüber der Schmelze konventioneller Wannenschmelzprozesse einen deutlich verringerten Anteil an anorganischen Verunreinigungen auf.

Beim Einschmelzen von stark mit organischen Verunreinigungen behaftetem Abfallglas, wie es beispielsweise bei der Mineralfaserproduktion anfällt, entstehen jedoch aufgrund von organischen Bestandteilen in der Schmelze sogenannte schwarze Kerne, die auch in einem nachfolgenden Refiningprozess nicht mehr eliminiert werden können.

Aufgabe der vorliegenden Erfindung ist es daher, eine Vorrichtung zum Einschmelzen von Glas zu schaffen, bzw. ein entsprechendes Verfahren anzugeben, bei dem eine Verunreinigung der Schmelze aufgrund von organischen Einschlüssen verringert wird.

Gelöst ist diese Aufgabe durch eine Vorrichtung zum Einschmelzen von Glas mit den Merkmalen des Patentanspruchs 1 sowie durch ein Verfahren zum Einschmelzen von Glas mit den Merkmalen des Patentanspruchs 8.

Bei der erfindungsgemäßen Vorrichtung wird also das in das Schmelzaggregat eingeführte Material mit einem reaktiven Gas, beispielsweise Sauerstoff aus wenigstens einer Gasdüse und/oder einer Gaslanze beaufschlagt Dadurch werden organische Verunreinigungen im aufschmelzenden Material oxidiert.

Eine bevorzugte Ausführungsform der Erfindung sieht vor, das Schmelzaggregat vertikal anzuordnen, wobei die Zugabeöffnung für das einzuschmelzende Material in einem oberen Bereich und die Austrittsöffnung für die Schmelze in einem unteren Bereich des Schmelzaggregats vorgesehen ist. Der sich an die Zugabeöffnung anschließende Bereich definiert einen Kopfraum, in den die Gasdüse und/oder Gaslanze mit ihrer Gasaustrittsöffnung einmündet. Bei dieser Ausgestaltung wird das einzuschmelzende Material bereits vor und während der Verflüssigung mit Sauerstoff beaufschlagt. Somit können selbst solche organischen Verunreinigungen, die im einzuschmelzenden Material ganz oder teilweise von Glas bedeckt sind, zuverlässig oxidiert werden.

Um eine gleichmäßige Beaufschlagung mit Sauerstoff zu gewährleisten, sind mehrere Gaslanzen und/oder Gasdüsen in gleichmäßigen Winkelabständen um die Zugabeöffnung angeordnet, oder eine sich im wesentlichen konzentrisch im Kopfraum erstreckende Gasdüse ist mit mehreren, in gleichmäßigen Winkelabständen angeordnete Gasaustrittsöffnungen versehen.

Als vorteilhaft erweist sich auch, den Abstand zwischen einer Gasaustrittsöffnung einer jeweils in den Kopfraum einmündenden Gasdüse bzw. Gaslanze zu einem bestimmungsgemäßen Schmelzspiegel einstellbar auszugestalten.

Damit kann der Abstand zwischen der Einmündung der jeweiligen Gaslanze bzw. Gasdüse und einem bestimmungsgemäßen Schmelzspiegel variiert und hierdurch insgesamt ein für die Verbrennung optimales Strömungsprofil des eingeleiteten reaktiven Gases im Kopfraum erzeugt werden.

Zweckmäßigerweise ist das Schmelzaggregat im Bereich des Kopfraums räumlich erweitert. Hierdurch kann eine größere Menge an zu verschmelzenden Material aufgenommen und die Zeitdauer, in der das Material mit Sauerstoff beaufschlagt wird, verlängert werden.

Besonders vorteilhaft ist eine Anordnung, bei der eine Gasreinigungseinrichtung mit einer Abgasleitung strömungsverbunden ist, mittels der Verbrennungsgase aus dem Schmelzaggregat abgeführt werden können. In diesem Falle kann der Kopfraum auch als Nachbrennkammer zur Beseitigung von Kohlenmonoxid, Dioxine, Furane u. dergl. eingesetzt werden.

Ein kontinuierlicher Betrieb der erfindungsgemäßen Vorrichtung kann durch den Einbau einer geeigneten Schleusenvorrichtung vor der Zugabeöffnung des Schmelzaggregats gewährleistet werden. Auf diese Weise wird vermieden, dass erhitztes, sauerstoffreiches Gas aus dem Schmelzaggregat in die Umgebung entweicht.

Die Aufgabe der Erfindung wird auch mit einem Verfahren zum Schmelzen von Glas mit den Merkmalen des Patentanspruchs 8 gelöst.

Beim erfindungsgemäßen Verfahren werden also Zugabestoffe, die einem Schmelzaggregat zugeführt und durch Wärmeeinwirkung einer mit dem Schmelzaggregat thermisch verbundenen Heizeinrichtung aufgeschmolzen werden, vor oder während dem Aufschmelzen mit einem reaktiven Gas, beispielsweise Sauerstoff beaufschlagt. Durch das zugeführte Gas werden insbesondere organische Verunreinigungen oxidiert und können in Gasform abgeführt werden. Die entstehende Schmelze weist somit keinen oder einen gegenüber herkömmlichen Schmelzen sehr viel geringeren Anteil an derartigen Verunreinigungen auf.

Vorteilhafterweise erfolgt die Zuführung des reaktiven Gases in einer gegenüber der Außenluft abgeschirmten Atmosphäre. Dadurch kann insbesondere vermieden werden, dass das zugeführte reaktive Gas in die Außenluft abströmt oder Bestandteile der Außenluft in das Innere des Schmelzaggregats gelangen.

Die Zuführung von reaktivem Gas in das Schmelzaggregat kann in einer weiterführenden Ausgestaltung auch dazu eingesetzt werden, schädliche Bestandteile des zugeführten Materials, wie Kohlenmonoxid, Dioxine oder Furane durch Verbrennung zu beseitigen.

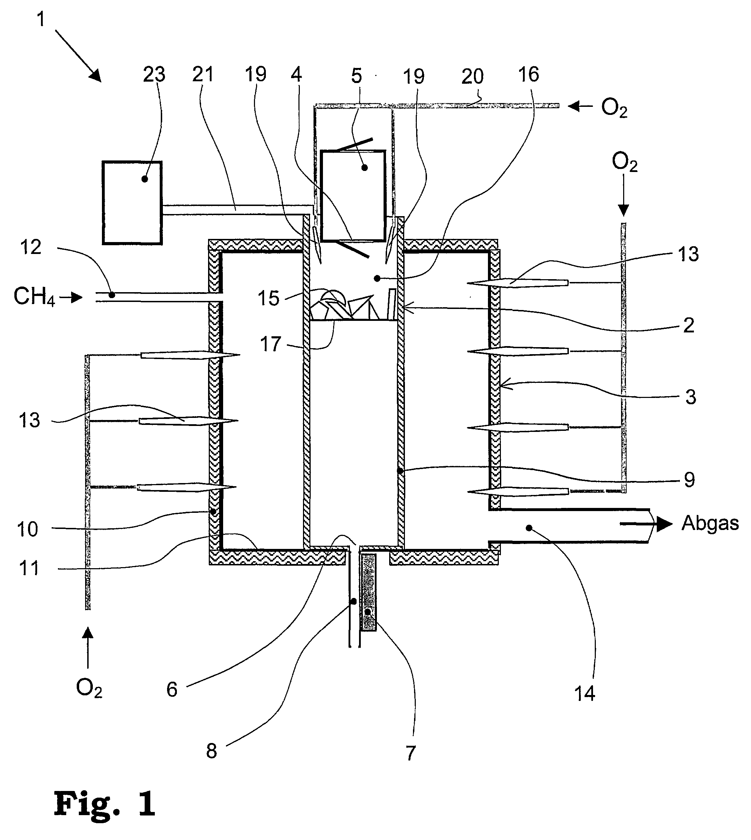

Anhand der Zeichnung soll nachfolgend ein Ausführungsbeispiel der Erfindung näher erläutert werden. Die einzige Zeichnung (Fig. 1) zeigt schematisch den Aufbau einer erfindungsgemäßen Vorrichtung zum Einschmelzen von Glas im Querschnitt.

Der in Fig. 1 dargestellte Schmelzofen 1 dient bevorzugt zum Einschmelzen und/oder Verglasen von - auch metallischen - Reststoffen oder zum Schmelzen von Altglas, insbesondere zum Einschmelzen von mit organischen Verunreinigungen behafteten Gläsern.

Der Schmelzofen 1 umfasst ein im wesentlichen rohrförmiges, vertikal betriebenes Schmelzaggregat 2, das konzentrisch im Innern einer im wesentlichen zylinderförmigen Brennkammer 3 aufgenommen ist. An seiner oberen Stirnseite ist das Schmelzaggregat 2 mit einer Zugabeöffnung 4 zum Zuführen von zu schmelzendem Rohmaterial versehen. Um einen kontinuierlichen Betrieb des Schmelzofens 1 zu ermöglichen, ist der Zugabeöffnung 4 eine Schleusenanordnung 5 vorgesetzt. Durch die Schleusenanordnung 5 kann laufend neues Rohmaterial 15 zugeführt werden, ohne dass die thermischen oder chemischen Verhältnisse innerhalb des Schmelzaggregats 2 durch eindringende Außenluft u. dergl. nachhaltig gestört werden. Seitlich zur Schleusenanordnung 5 sind unten näher erläuterte Mittel zum Zuführen von Sauerstoff in das Innere des Schmelzaggregats vorgesehen.

An ihrem unteren Abschnitt weist das Schmelzaggregat 2 eine Austrittsöffnung 6 zum Ablassen der im Schmelzaggregat 2 entstehenden Schmelze auf. An der Austrittsöffnung 6 ist eine Austrittsdüse 8 aus einem gut wärmeleitfähigen und chemisch reaktionsträgen Material, wie etwa Platin angeordnet, die mit einer Heizeinrichtung 7 thermisch verbunden ist. Durch Heizen der Austrittsdüse 8 kann sichergestellt werden, dass sich das innerhalb der Austrittsdüse 8 befindliche Material im geschmolzenem, also fließfähigen Zustand befindet.

Die Wandung 9 des Schmelzaggregats 2 besteht aus einem hitzebeständigen und gasdichten, beispielsweise keramischen oder metallischen Material. Das dabei eingesetzte Material bestimmt sich nach der Art und der Zusammensetzung des einzuschmelzenden Stoffe, insbesondere soll das Material der Wandung 9 so beschaffen sein, dass es mit der im Innern des Schmelzaggregats 2 entstehenden Schmelze möglichst keine Reaktion eingeht.

Durch die mit einer Isolierschicht 10 versehene Wandung 11 der Brennkammer 3 ist eine Brennstoffzuführung 12 für gasförmigen Brennstoff, beispielsweise Erdgas, sowie eine Vielzahl von Injektionsdüsen 13 für Sauerstoff hindurchgeführt. Die Injektionsdüsen 13 sind ringsum in gleichmäßigen Winkelabständen und in mehreren Reihen übereinander beabstandet angeordnet. Zum Ableiten des bei der Verbrennung entstehenden Abgases ist eine Gasableitung 14 vorgesehen. Der durch die Brennstoffzuführung 12 eingeleitete Brennstoff wird mit dem durch die Injektionsdüsen 13 zugegebenen Sauerstoff verbrannt. Die aus den Injektionsdüsen 13 einer Reihe zugeführte Sauerstoffmenge ist dabei jeweils separat einstellbar, wobei insgesamt eine den stöchiometrischen Verhältnissen entsprechende Sauerstoffmenge zugeführt wird. Diese Vorgehensweise ermöglicht die Einstellung eines für den Schmelzprozess vorteilhaften Temperaturprofils über die Höhe des Schmelzaggregats 2.

Beim Betrieb des Schmelzofens 1 wird dem Schmelzaggregat 2 Rohmaterial 15 zugeführt, das durch die in der Brennkammer 3 erzeugte Wärme bis zur Höhe eines Schmelzspiegels 17 aufgeschmolzen wird. Idealerweise liegt der Schmelzspiegel bei etwa 2/3 der Gesamthöhe des Schmelzaggregats 2. Der durch den Raum zwischen Zugabeöffnung 4 und Schmelzspiegel 17 definierte Kopfraum 16 ist dabei ganz oder teilweise mit Rohmaterial 15 gefüllt, das sich im Zustand des Aufschmelzens befindet, also noch feste Bestandteile aufweist. Der Kopfraum 16 wird mit Sauerstoff beaufschlagt, der mittels Sauerstofflanzen 19, die mit einer Sauerstoffversorgung 20 verbunden sind, eingedüst wird. Die Sauerstofflanzen 19 sind konzentrisch, in gleichmäßigen Winkelabständen um die Schleusenanordnung 5 angeordnet und ragen mit ihrem vorderen Abschnitt um ein bestimmtes, jedoch variables Maß in das Innere des Kopfraums hinein 16. Der Zwischenraum zwischen Sauerstofflanzen 19, Schleusenanordnung 5 und Wandung 9 des Schmelzaggregats 2 ist gasdicht abgeschlossen. Durch den eingedüsten Sauerstoff und die durch Wärmeleitung aus der Brennkammer 3 in das Schmelzaggregat 2 im Kopfraum 16 eingetragene Hitze werden organische Verunreinigungen des Rohmaterials 15 schnell und zuverlässig verbrannt, wobei die zuvor beschriebene Einstellbarkeit sowohl des Temperaturprofils längs des Schmelzaggregats 2, als auch der Tiefe, mit der die Sauerstofflanzen 19 in das Innere des Kopfraums 16 hineinragen, die Herstellung von für die Verbrennung optimaler Bedingungen ermöglicht. Auch gesundheits- oder umweltschädliche Verunreinigungen, wie Kohlenmonoxid, Dioxine, Furane u. dergl. können auf diese Weise durch Verbrennung im Kopfraum 16 beseitigt werden. Das entstehende Verbrennungsabgas wird über eine Abgasleitung 21 abgeleitet und einer Einrichtung 23 zur Gasreinigung, beispielsweise einer Filteranlage, zugeführt und schließlich in gereinigter Form in die Außenatmosphäre abgegeben.

Der Schmelzofen 1 ist kompakt und flexibel einsetzbar. Er ermöglicht auch die Wiederverwertung von Abfallglas, das bei der Herstellung von Mineralfasen anfällt. Bei diesen Materialien sind die zumeist aus organischem Material bestehende Zugabestoffe, wie Schlichten, Schmälzen oder Haftmittel mit konventionellen Verfahren nur bei wirtschaftlich kaum zu vertretendem Aufwand vom Glas zu trennen. Im Schmelzaggregat 2 des Schmelzofens 1 werden diese Stoffe beim Aufschmelzen des Glases weitgehend rückstandsfrei verbrannt.

Durch die Trennung von Schmelz- und Verbrennungsraum kann für die Isolierschicht 10 der Brennkammer 3 eine einfache und preiswerte Isoliermasse gewählt werden. Da auch das Abgas aus der Brennkammer 3 nicht mit der Schmelze im Schmelzaggregat 2 in Berührung kommt, besteht es - bei Verbrennung von Erdgas - zu annähernd 100% aus Kohlendioxid und Wasserdampf. Der Schmelzofen 1 kann sowohl kontinuierlich als auch im Batch - Betrieb eingesetzt werden und eignet sich insbesondere in hervorragender Weise als Ergänzung zu konventionellen Wannenschmelzverfahren.

### Bezugszeichenliste

- 1.: Schmelzofen
- 2.: Schmelzaggregat
- 3.: Brennkammer
- 4.: Zugabeöffnung
- 5.: Schleusenanordnung
- 6.: Austrittsöffnung
- 7.: Heizeinrichtung
- 8.: Austrittsdüse
- 9.: Wandung (des Schmelzaggregats)
- 10.: Isolierschicht
- 11.: Wandung (der Brennkammer)
- 12.: Brennstoffzuführung
- 13.: Injektionsdüse
- 14.: Gasableitung
- 15.: Rohmaterial
- 16.: Kopfraum
- 17.: Schmelzspiegel
- 18.: -
- 19.: Sauerstofflanzen
- 20.: Sauerstoffversorgung
- 21.: Abgasleitung
- 22.: -
- 23.: Einrichtung zur Gasreinigung

## Patentansprüche

1. Vorrichtung zum Einschmelzen von Glas, mit einem Verbrennungsraum (3) thermisch verbundenen Schmelzaggregat (2), das mit einer Zugabeöffnung (4) zum Zuführen von zu schmelzenden Teilen sowie mit einer Austrittsöffnung (6) für geschmolzenes Material versehen ist,
**dadurch gekennzeichnet,**
**dass** das Schmelzaggregat (2) mit wenigstens einer Gasdüse (19) und/oder einer Gaslanze zum Einbringen eines reaktiven Gases, wie Sauerstoff, versehen ist.

2. Vorrichtung nach Anspruch 1, **dadurch gekennzeichnet, dass** das im wesentlichen vertikal angeordnete Schmelzaggregat (2) in seinem oberen Bereich einen sich an die Zugabeöffnung (4) anschließenden, gegenüber der Außenatmosphäre abdichtbaren Kopfraum (16) umfasst, in den die Gasdüse und/oder die Gaslanze mit einer Gasaustrittsöffnung einmündet.

3. Vorrichtung nach Anspruch 2, **dadurch gekennzeichnet, dass** mehrere Gasdüsen (19) und/oder Gaslanzen in gleichmäßigen Winkelabständen um die Zugabeöffnung (4) angeordnet sind.

4. Vorrichtung nach Anspruch 2 oder 3, **dadurch gekennzeichnet, dass** der Abstand zwischen einer Gasaustrittsöffnung einer jeweils in den Kopfraum (16) einmündenden Gasdüse (19) bzw. Gaslanze zu einem bestimmungsgemäßen Schmelzspiegel (17) einstellbar ist.

5. Vorrichtung nach einem der Ansprüche 2 bis 4, **dadurch gekennzeichnet, dass** das Schmelzaggregat (2) sich im Bereich des Kopfraums (16) erweitert ist.

6. Vorrichtung nach Anspruch 2 bis 5, **dadurch gekennzeichnet, dass** der Kopfraum (16) mit einer Abgasleitung (21) zum Abführen von Verbrennungsgasen ausgerüstet ist, welche Abgasleitung (21) mit einer Gasreinigungseinrichtung (23) strömungsverbunden ist.

7. Vorrichtung nach einem der vorhergehenden Ansprüche, **dadurch gekennzeichnet, dass** der Zugabeöffnung (4) eine Schleusenanordnung (5) vorgeschaltet ist.

8. Verfahren zum Einschmelzen von Glas, bei dem Zugabestoffe (15) einem Schmelzaggregat (2) zugeführt, durch Wärmeeinwirkung eines mit dem Schmelzaggregat (2) thermisch verbundenen Heizeinrichtung, etwa ein Verbrennungsraum (3) oder einer elektrischen Heizeinrichtung, aufgeschmolzen und in flüssiger Form einer Weiterverarbeitung zugeführt wird, **dadurch gekennzeichnet, dass** die Zugabestoffe (15) im Schmelzaggregat (2) vor und/oder während dem Aufschmelzen mit einem, mittels wenigstens einer Gasdüse und/oder Gaslanze (19) eingebrachten, reaktiven Gas, etwa Sauerstoff, beaufschlagt werden.

9. Verfahren nach Anspruch 8, **dadurch gekennzeichnet, dass** die Zuführung des reaktiven Gases in einer gegenüber der Außenluft abgeschirmten Atmosphäre erfolgt.

10. Verfahren nach Anspruch 9, **dadurch gekennzeichnet, dass** durch die Zuführung des reaktiven Gases in das Schmelzaggregat (2) schädliche Bestandteile des einzuschmelzenden Materials wie Kohlenmonoxid, Dioxine, Furane u. dergl. durch Verbrennung eliminiert werden.

## Claims

1. Device for melting glass, having a melting unit (2) which is thermally connected to a combustion chamber (3) and is provided with an addition opening (4) for supplying parts that are to be melted and with an outlet opening (6) for molten material, **characterized in that** the melting unit (2) is provided with at least one gas nozzle (19) and/or a gas lance for introducing a reactive gas, such as oxygen.

2. Device according to Claim 1, **characterized in that** the substantially vertically arranged melting unit (2), in its upper region, comprises a head space (16) which is connected to the addition opening (4), can be sealed off with respect to the outside atmosphere and into which the gas nozzle and/or the gas lance opens out by way of a gas outlet opening.

3. Device according to Claim 2, **characterized in that** a plurality of gas nozzles (19) and/or gas lances are arranged at regular angular intervals around the addition opening (4).

4. Device according to Claim 2 or 3, **characterized in that** the distance between a gas outlet opening of a gas lance or gas nozzle (19) which in each case opens out into the head space (16) and an intended melting level (17) is adjustable.

5. Device according to one of Claims 2 to 4, **characterized in that** the melting unit (2) is widened in the region of the head space (16).

6. Device according to Claims 2 to 5, **characterized in that** the head space (16) is equipped with an off-gas line (21) for discharging combustion gases, which off-gas line (21) is flow-connected to a gas purification device (23).

7. Device according to one of the preceding claims, **characterized in that** a lock arrangement (5) is connected upstream of the addition opening (4).

8. Process for melting glass, in which additional substances (15) are fed to a melting unit (2), are melted down by the action of heat of a heating device which is thermally connected to the melting unit (2), for example a combustion chamber (3) or an electrical heating device, and is fed in liquid form for further processing, **characterized in that** the additional substances (15) in the melting unit (2), before and/or during melting-down, are acted on by a reactive gas, for example oxygen, which is introduced by means of at least one gas nozzle and/or gas lance (19).

9. Process according to Claim 8, **characterized in that** the reactive gas is supplied in an atmosphere which is shielded with respect to the outside air.

10. Process according to Claim 9, **characterized in that** the supply of the reactive gas into the melting unit (2) eliminates harmful constituents of the material which is to be melted, such as carbon monoxide, dioxins, furans and the like, by combustion.

## Revendications

1. Dispositif de fusion de verre, comprenant une unité de fusion (2) reliée thermiquement à une chambre de combustion (3), qui est pourvue d'une ouverture d'apport (4) pour l'apport d'articles à fondre ainsi que d'une ouverture de sortie (6) pour la matière fondue,
**caractérisé en ce que**
l'unité de fusion (2) est pourvue d'au moins une buse à gaz (19) et/ou d'une lance à gaz pour l'introduction d'un gaz réactif tel que de l'oxygène.

2. Dispositif selon la revendication 1, **caractérisé en ce que** l'unité de fusion (2) disposée essentiellement verticalement comprend dans sa partie supérieure une chambre de tête (16) pouvant être rendue étanche par rapport à l'atmosphère extérieure, se raccordant à l'ouverture d'apport (4), dans laquelle la buse à gaz et/ou la lance à gaz débouche avec une ouverture de sortie de gaz.

3. Dispositif selon la revendication 2, **caractérisé en ce que** plusieurs buses à gaz (19) et/ou lances à gaz sont disposées à intervalles angulaires réguliers autour de l'ouverture d'apport (4).

4. Dispositif selon la revendication 2 ou 3, **caractérisé en ce que** la distance entre une ouverture de sortie de gaz d'une buse à gaz (19) ou d'une lance à gaz débouchant à chaque fois dans la chambre de tête (16) peut être ajustée à un niveau de fusion (17) correspondant aux prescriptions.

5. Dispositif selon l'une quelconque des revendications 2 à 4, **caractérisé en ce que** l'unité de fusion (2) s'élargit dans la région de la chambre de tête (16).

6. Dispositif selon l'une quelconque des revendications 2 à 5, **caractérisé en ce que** la chambre de tête (16) est équipée d'une conduite de gaz d'échappement (21) pour l'évacuation de gaz de combustion, laquelle conduite de gaz d'échappement (21) est reliée fluidiquement à un dispositif d'épuration des gaz (23).

7. Dispositif selon l'une quelconque des revendications précédentes, **caractérisé en ce qu'**un agencement d'éclusage (5) est monté avant l'ouverture d'apport (4).

8. Procédé de fusion de verre, dans lequel on achemine des substances d'apport (15) à une unité de fusion (2), on les fait fondre par apport thermique d'un dispositif de chauffage relié thermiquement à l'unité de fusion (2), par exemple une chambre de combustion (3) ou un dispositif de chauffage électrique, et on les achemine sous forme liquide à un post-traitement, **caractérisé en ce que** les substances d'apport (15) sont sollicitées dans l'unité de fusion (2) avant et/ou pendant la fusion, par un gaz réactif introduit au moyen d'au moins une buse à gaz et/ou une lance à gaz (19), par exemple de l'oxygène.

9. Procédé selon la revendication 8, **caractérisé en ce que** l'alimentation en gaz réactif s'effectue dans une atmosphère protégée contre l'air extérieur.

10. Procédé selon la revendication 9, **caractérisé en ce que** du fait de l'alimentation en gaz réactif dans l'unité de fusion (2), les constituants toxiques de la matière à fondre, tels que le monoxyde de carbone, les dioxines, les furanes et similaires, sont éliminés par combustion.
